# EUROPEAN PATENT SPECIFICATION

(11) **EP 4 624 213 B1**
(45) Date of publication and mention of the grant of the patent: **25.11.2026**
(21) Application number: 24222871.6
(22) Date of filing: 23.12.2024
(51) Int. Cl.: B60K 1/04, B60L 53/16

(54) **WORKING VEHICLE**
ARBEITSFAHRZEUG
VÉHICULE DE TRAVAIL

(30) Priority: 29.03.2024 JP 2024057111
(43) Date of publication of application: 01.10.2025
(73) Proprietor: Takeuchi MFG. Co., Ltd., Hanishina-gun, Nagano 389-0605 (JP)
(72) Inventor: Maruyama, Shota, Nagano, 389-0605 (JP); Kubota, Kai, Nagano, 389-0605 (JP); Kumeuchi, Kengo, Nagano, 389-0605 (JP)
(74) Representative: Liesegang, Eva

(56) References cited:
- WO-A1-2023/074791
- DE-T5- 112019 000 009
- JP-A- 2022 047 111

## Description

### [Technical Field]

The present invention relates to a working vehicle.

### [Background Art]

As a working vehicle, for example, a crawler-type skid-steer loader, a hydraulic excavator and the like that are used for digging a ground or for moving dug or excavated soil and sand have been well-known. Recently, as a measure to improve environment, a working vehicle that uses an electric motor as a power source has been practically used. Such an electrically operated working vehicle has an on-board charging power source connector that is connectable to an electricity supply cable on a power source side, and the on-board charging power source connector is connected to a battery via a charging cable.

The on-board charging power source connector is mounted on an outer shell of an on-board charging power source connector case. The on-board charging power source connector is connected to a charging cable on a vehicle body side in the on-board charging power source connector case. The on-board charging power source connector case is fixed to an upper surface of an upper end protruding portion of a counterweight at a rear portion of a vehicle body. The charging cable penetrates a bottom plate portion of the on-board charging power source connector case and the upper end protruding portion of the counterweight and is connected to the battery (see patent literature JP-A-2022-47111, for example).

Further, in the working vehicle described in the above-mentioned literature, the on-board charging power source connector is configured such that the on-board charging power source connector is covered by a battery cover from a rear side when the battery cover is opened at the time of performing a maintenance.

DE 11 2019 000 009 T5 discloses a work vehicle provided with a charging port that can be accessed from the exterior. The charging port comprises a normal charging coupler and a quick charging coupler arranged side by side so as to be adjacent and configured so that a normal charging connector and a quick charging connector connected to an external power supply can be connected from terminals. The terminal of the normal charging coupler and the terminal of the quick charging coupler face each other in the direction of side-by-side arrangement of the normal charging coupler and the quick charging coupler.

### [Summary of Invention]

### [Technical Problem]

The on-board charging power source connector case described in the above-mentioned patent literature JP-A-2022-47111 is fixed to the counterweight by fixing screws by way of a bottom plate portion inside a side wall portion. An upper portion of the side wall portion is closed and hence, an assembly work is performed in a space inside the on-board charging power source connector case. Accordingly, there exist drawbacks that the assembly work is cumbersome and the number of man-hours is increased.

Further, the working vehicle described in patent literature JP-A-2022-47111 adopts the configuration where a connecting portion between an electricity supply cable on an external power source side and the charging cable on a vehicle body side, that is, a connecting portion between an electricity supply connector and the on-board charging power source connector is directed in an oblique downward direction and extends to an area in the vicinity of the center in a vehicle width. Accordingly, there exists a drawback that a space that the on-board charging power source connector case occupies in a height direction and a vehicle width direction becomes large. Further, in an inspection work, the on-board charging power source connector is covered by the opened battery cover and hence, there exists a drawback that the inspection work in a state where the battery cover is opened is difficult.

The present invention has been made to overcome at least one of the above-mentioned drawbacks, and it is an object of the present invention to provide a working vehicle that can reduce the number of assembling man-hours, and can realize the saving of a space of a battery cover around an on-board charging power source connector case.

### [Solution to problem]

[1] A working vehicle according to the present invention includes an on-board charging power source connector to which a charging cable for supplying electricity from an external power source to a battery disposed inside a vehicle body is connected; and a hollow on-board charging power source connector case that is disposed on a rear end portion of the vehicle body and an end portion of a battery cover on a right side or a left side in a vehicle width direction, and allows the charging cable to pass therethrough. The on-board charging power source connector case includes an on-board charging power source connector mounting portion that is disposed on an external side upper surface of the battery cover and is configured to mount the on-board charging power source connector thereon; and an on-board charging power source connector case fixing portion that extends from the on-board charging power source connector mounting portion, and penetrates the battery cover. The on-board charging power source connector case fixing portion is fixed to a reinforcing plate that is fixed to an inner back surface of the battery cover.
[2] In the working vehicle according to the present invention, it is preferred that the on-board charging power source connector case is mounted on the battery cover in a state where an electricity supply port of the on-board charging power source connector is directed toward an oblique rear side of the vehicle body with respect to the vehicle width direction.
[3] In the working vehicle according to the present invention, it is preferred that the reinforcing plate has a raised portion on the inner back surface of the battery cover, the raised portion is disposed along the on-board charging power source connector case fixing portion, and the on-board charging power source connector case is fixed by welding between the on-board charging power source connector case fixing portion and the raised portion.
[4] In the working vehicle according to the present invention, it is preferred that the on-board charging power source connector case and the on-board charging power source connector are disposed inside a swing radius of the vehicle body.
[5] In the working vehicle according to the present invention, it is preferred that the charging cable has a length that allows connection between the on-board charging power source connector and a charging controller disposed between the on-board charging power source connector and the battery when the battery cover is fully opened.
[6] In the working vehicle according to the present invention, it is preferred that waterproof treatment is applied to a gap between the battery cover and the on-board charging power source connector case.
[7] In the working vehicle according to the present invention, it is preferred that the waterproof treatment is caulking.
[8] In the working vehicle according to the present invention, it is preferred that, at a top surface of the on-board charging power source connector case, a connector cap holding member that holds a connector cap for sealing an electricity supply port of the on-board charging power source connector is fixed.

### [Advantageous effect of the Invention]

The on-board charging power source connector case is fixed by welding inside the battery cover in advance. The on-board charging power source connector is mounted on the hollow on-board charging power source connector case. The charging cable that is connected to the on-board charging power source connector is made to pass through the on-board charging power source connector case and is connected to the battery via the charging controller. In the prior art described above, the connector case is mounted on the counterweight by screwing inside the connecter case and, thereafter, the on-board charging power source connector is mounted on the connector case. Accordingly, the assembly work is cumbersome, and the number of assembling man-hours is increased. On the other hand, in the present invention, the on-board charging power source connector is assembled to the on-board charging power source connector case that is integrally formed with the battery case. This assembly work can be easily performed outside the on-board charging power source connector case and hence, the assembly work can be performed easily, and the number of assembling man-hours can be reduced.

Further, the on-board charging power source connector case is fixed to the end portion of the outside upper surface of the battery cover on a right side or on a left side in a vehicle width direction. Accordingly, the saving of a space on the upper surface side of the battery cover can be realized. For example, in a case where the mounting position of the on-board charging power source connector of the battery cover is disposed at the end portion on the right side, a vacant space that is formed on a left side from the on-board charging power source connector mounting position can be effectively used.

As has been described above, the working vehicle according to the present invention can reduce the number of assembling man-hours of the on-board charging power source connector and hence, saving of the space around the on-board charging power source connector case can be realized.

### [Brief Description of Drawings]

Fig. 1 is a perspective view of one example of a working vehicle 1 as viewed from a rear side.
Fig. 2 is a perspective view of a connector case 31 as viewed from a rear side of a vehicle body 10.
Fig. 3 is a cross-sectional view taken along an X-X section line in Fig. 2.
Fig. 4 is a perspective view of the connector case 31 as viewed from the inside and below a battery cover 27.
Fig. 5 is a perspective view of a state in which the battery cover 27 is fully opened as viewed from a rear side of the vehicle body 10.

### [Description of embodiments]

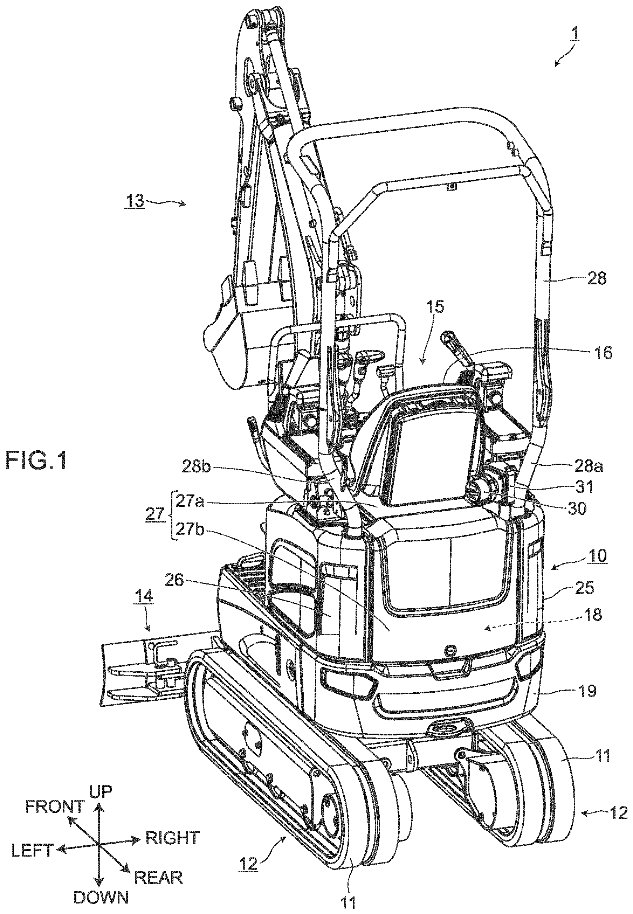

Hereinafter, a working vehicle 1 according to an embodiment of the present invention is described with reference to Fig. 1 to Fig. 4.

### (Configuration of working vehicle 1)

Fig. 1 is a perspective view of one example of a working vehicle 1 as viewed from a rear side. In the respective drawings described hereinafter, the directions of the respective portions with respect to the vehicle body 10 are indicated by arrows. That is, a forward traveling direction of the working vehicle 1 is set as "front", a reverse traveling direction is set as "rear", a right side toward the forward traveling direction is set as "right", a left side toward the forward traveling direction is set as "left", and a ground side is set as "down", and an upper side with respect to the ground is set as "up". The working vehicle 1 includes: a traveling equipment 12 that has a pair of crawlers 11 below both ends of the vehicle body 10 in a vehicle width direction (a lateral direction); and a work equipment 13 that is hydraulically driven, a blade equipment 14 and the like. The vehicle body 10 is also referred to as an upper slew body. A counterweight 19 is disposed on a lower portion of a rear side of the vehicle body 10.

On an upper portion of the vehicle body 10, a cabin 15 in which an operator operates the traveling equipment 12, the work equipment 13 and the blade equipment 14, and an operator seat 16 on which the operator is seated are disposed. The traveling equipment 12, the work equipment 13 and the blade equipment 14 are described in the same manner as a well-known working vehicle and hence, the description of these devices is omitted.

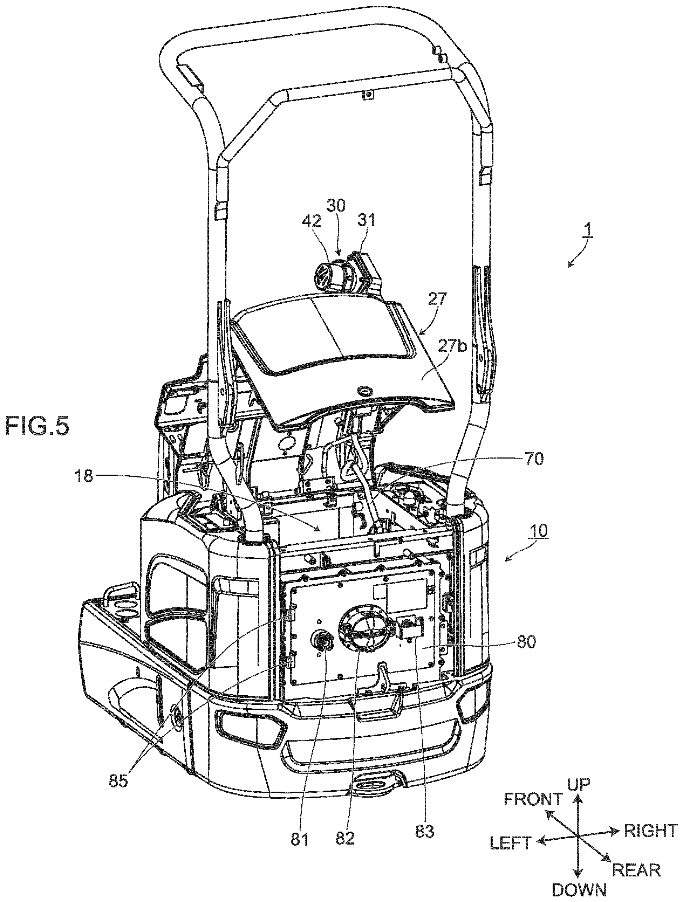

Although not illustrated in the drawings, a machine compartment 18 (also see Fig. 5) is disposed in the vehicle body 10. Although not illustrated in the drawings, in the machine compartment 18, an electric motor, a hydraulic pump that supplies a pressurized oil by being driven by the electric motor, a battery that supplies electricity to the electric motor and other equipment and the like are housed. The machine compartment 18 is surrounded by a right side cover 25 and a left side cover 26 disposed on both left and right sides of the vehicle body 10 and a battery cover 27. The battery cover 27 includes: an upper plate portion 27a on an outer upper surface extending on a lower side of the operator seat 16; and a side plate portion 27b that covers a rear portion of the machine compartment 18. The operator seat 16 is disposed on the upper plate portion 27a.

The battery cover 27 includes a hinge (not indicated in the drawing) on a front side of the upper plate portion 27a, and the battery cover 27 is openable and closable in a vertical direction using this hinge as a rotary shaft (see Fig. 5). The operator seat 16 changes its posture in response to opening or closing of the battery cover 27.

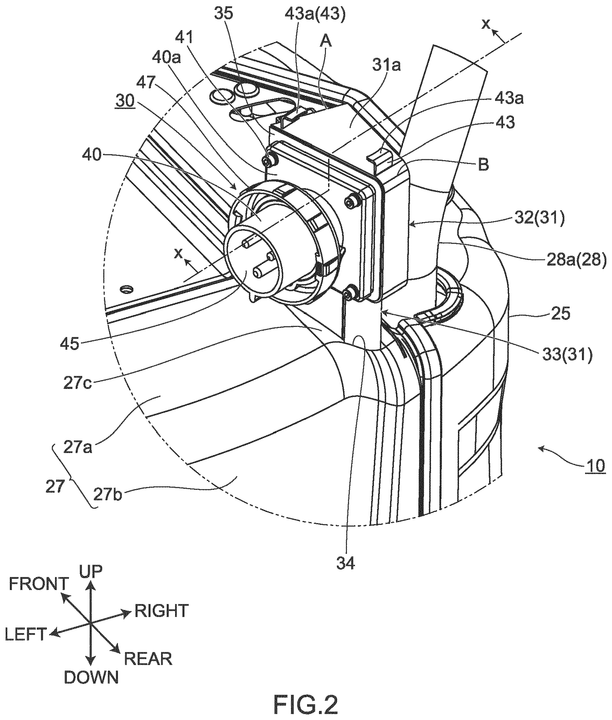

On a rear side of the vehicle body 10, canopy poles 28 are erected at the right side cover 25 and the left side cover 26. With respect to left and right pillar portions of the canopy poles 28, the right pillar portion of the canopy pole 28 is referred to as a right canopy pole 28a, and the left pillar portion of the canopy pole 28 is referred to as a left canopy pole 28b. An on-board charging power source connector case 31 on which an on-board charging power source connector 30 is mounted is fixed to a right end of a rear end portion of the upper plate portion 27a of the battery cover 27. The on-board charging power source connector 30 is disposed adjacently to the right canopy pole 28a. By arranging the on-board charging power source connector 30 and the on-board charging power source connector case 31 in this manner, a vacant space is formed on a left side of the on-board charging power source connector 30. The configuration of the on-board charging power source connector 30 is described with reference Fig. 2 to Fig. 4. In the description made hereinafter, the on-board charging power source connector case 31 is described as a connector case 31.

### (Configuration of connector case 31)

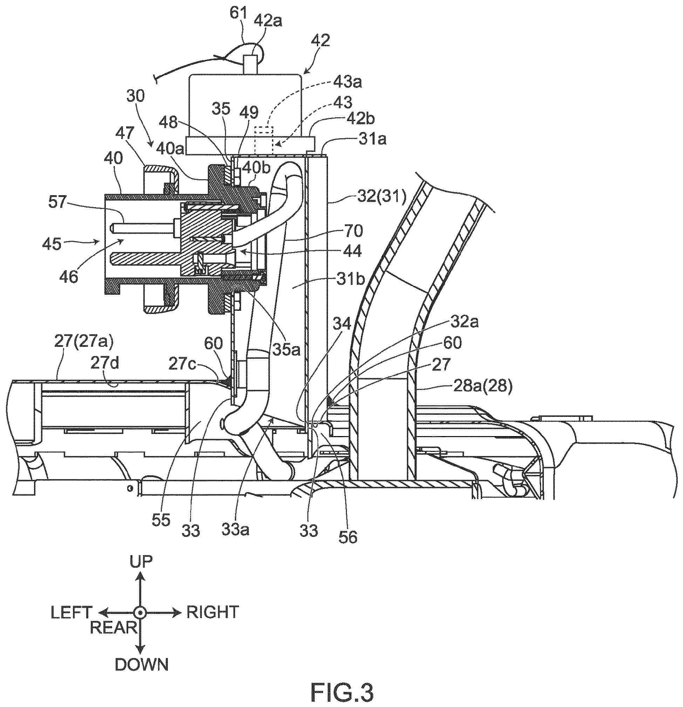

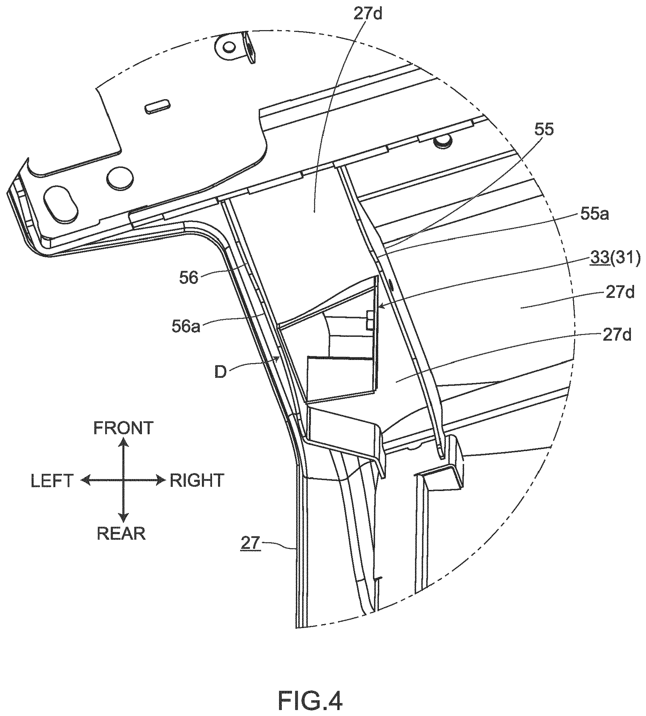

Fig. 2 is a perspective view illustrating the configuration of the connector case 31 as viewed from a rear side the vehicle body 10. In Fig. 2, a on-board charging power source connector mounting portion 32 of the connector case 31 exposed to the outside of the battery cover 27 is described. The connector case 31 is disposed on a right side end portion of the upper plate portion 27a of an outer upper surface side of the battery cover 27. The battery cover 27 is an integral body formed by connecting portions between the upper plate portions 27a and the side plate portions 27b that cover the rear side of the vehicle body 10 in a arcuate shape. Further, a right side end portion of the upper plate portion 27a has a inclined surface 27c that is gently inclined toward a lower side. The connector case 31 is disposed on the inclined surface 27c. The connector case 31 is constituted of: an on-board charging power source connector mounting portion 32 on an upper side of the upper plate portion 27a; and the on-board charging power source connector case fixing portion 33 (see Fig. 3 and Fig. 4) that penetrates and extends the upper plate portion 27a from the on-board charging power source connector mounting portion 32.

In the description made hereinafter, there may be a case where the on-board charging power source connector mounting portion 32 is referred to as the connector mounting portion 32, and the on-board charging power source connector case fixing portion 33 is referred to as the connecter case fixing portion 33. The connecter case fixing portion 33 is made to pass through a through hole 34 formed in the inclined surface 27c, and is fixed by welding to a lower portion of an inner side of the battery cover 27. The fixing structure between the battery cover 27 and the connector case 31 is described with reference to Fig. 3 and Fig. 4.

In the connector mounting portion 32, the shape of an upper surface plate portion 31a that forms a top plate of the connector mounting portion 32 as viewed from above forms a quadrangular shape. To be more specific, the shape of the upper surface plate portion 31a is a quadrangular shape where a side B on a rear side is shorter than a side A on a front side. The connector case 31 is hollow, and a charging cable 70 and, a connecting portion (see Fig. 3) between the on-board charging power source connector 30 and the charging cable 70 are housed in the connector case 31. A side surface of the connector mounting portion 32 on a left side is a on-board charging power source connector mounting plate portion 35 on which the on-board charging power source connector 30 is mounted. In the description made hereinafter, there may be a case where the on-board charging power source connector mounting plate portion 35 is referred to as the connector mounting plate portion 35.

The on-board charging power source connector 30 is configured such that a tail portion 40b of a housing 40 (see Fig. 3) is made to pass through a through hole 35a (illustrated in Fig. 3) formed in the connector mounting plate portion 35 (see Fig. 3) and the tail portion 40b is fixed to the connector mounting plate portion 35 by way of a fixing plate portion 40a by four bolts 41. To the upper surface plate portion 31a of the connector case 31, a connector cap holding member 43 for holding a connector cap 42 (see Fig. 3) is fixed by welding. The connector cap holding members 43 that form a pair are disposed at positions close to the side A of the upper surface plate portion 31a, and the connector cap holding members 43 that form the other pair are disposed at positions close to the side B of the upper surface plate portion 31a. The connector cap holding members 43 have pawl portions 43a that are opposite each other. The pawl portions 43a are configured to be engageable with flange portions 42b (see Fig. 3) of the connector cap 42. The connector cap holding member 43 is provided for holding the connector cap 42 during battery charging.

The connector mounting plate portion 35 is disposed on a left side of the vehicle body 10 and is directed toward an oblique rear side of the vehicle body 10. That is, the connector mounting plate portion 35 is mounted on the connector case 31 such that a charging port 45 of the on-board charging power source connector 30 is mounted on a left side of the vehicle body 10 and is directed toward an oblique rear side of the vehicle body 10. However, the connector case 31 and the on-board charging power source connector 30 (a distal end portion of the charging port 45) are disposed within a swing radius of the vehicle body 10. Further, the shape of the connector case 31 as viewed in the plan view has a quadrangular shape, and the side B on the rear side is set shorter than the side A on the front side. The connector case 31 is disposed on a right end portion of the battery cover 27 and hence, the connector case 31 is disposed adjacently to the right canopy pole 28a erected on the right side cover 25. Accordingly, by shortening the side B of the connector case 31 close to the right canopy pole 28a, the connector case 31 can be disposed to the right end portion of the battery cover 27 as much as machining is possible. Subsequently, the mounting structure of the on-board charging power source connector 30 on the connector case 31 and the fixing structure of the connector case 31 to the battery cover 27 are described with reference to Fig. 3 and Fig. 4.

### (Mounting structure of on-board charging power source connector 30 and connector case 31)

Fig. 3 is a cross-sectional view taken along a line X-X in Fig. 2. The connector case 31 is configured such that a connector case fixing portion 33 is made to pass through the through hole 34 formed in the battery cover 27 and is fixed by welding to a reinforcing plate 56 and an inner back surface 27d of the battery cover 27. The position of the connector mounting portion 32 in the vertical direction with respect to the battery cover 27 is defined by bringing a lower end 32a into contact with the battery cover 27. A reinforcing plate 55 and the reinforcing plate 56 are fixed by welding to the inner back surface 27d of the battery cover 27. The connector case 31 is fixed by welding to a raised portion 56a of the reinforcing plate 56. Fixing of the connector case 31 by welding is described with reference to Fig. 4. In a gap formed between the battery cover 27 and the connector case fixing portion 33, caulking 60 is applied for providing waterproof treatment over the entire circumference.

The on-board charging power source connector 30 is mounted on the connector mounting plate portion 35. The on-board charging power source connector 30 is connected to a terminal portion 46 housed in the housing 40. An electricity supply connector (not illustrated in the drawing) is connected to the on-board charging power source connector 30 and, thereafter, is fixed by an electricity supply connector fixing cap 47. The electricity supply connector fixing cap 47 is configured to fix the electricity supply connector by a well-known bayonet lock. In the housing 40, a connector terminal 57 that protrudes toward the electricity supply port 45 is disposed. The connector terminal 57 is constituted of three connector terminals. The on-board charging power source connector 30 illustrated in Fig. 3 can use a well-known power supply connector and hence, the detailed explanation of the on-board charging power source connector 30 is omitted.

In the on-board charging power source connector 30, a gasket 48 having a ring-shape is interposed between the fixing plate portion 40a of the housing 40 and the connector mounting plate portion 35, and the tail portion 40b of the housing 40 is inserted into the through hole 35a formed in the connector mounting plate portion 35. The on-board charging power source connector 30 is fixed to the connector mounting portion 32 by allowing bolts 41 to pass through the fixing plate portion 40a, the gasket 48 and the connecter mounting plate portion 35 in this order from the electricity supply port 45 side and to engage with nuts 49 that are fixed by welding to the connector mounting plate portion 35.

The on-board charging power source connector 30 includes the connector cap 42 that can seal the electricity supply port 45. The connector cap 42 has a structure where the connector cap 42 can be detachably mounted on the housing 40 by a bayonet lock. The connector cap 42 has a wire engaging portion 42a on a top portion thereof, and a wire 61 is engaged with the wire engaging portion 42a. Although not illustrated in the drawing, a distal end of the wire 61 is fixed to a fixing portion (not illustrated in the drawing) formed on a vertical surface (see Fig. 2) that includes the side A of the connector case 31. The connector cap 42 includes the flange portion 42b that protrudes toward an outer periphery thereof, and the connector cap 42 can be held by sandwiching the flange portion 42b (see Fig. 3) between the pair of pawl portions 43a of the connector cap holding members 43.

The charging cable 70 is connected to a charging cable connecting portion 44. The charging cable 70 extends toward a lower side from a position where the charging cable is connected to the on-board charging power source connector 30 through a space 31b that is a hollow portion of the connector case 31, and is connected to a battery (not illustrated in the drawing). The extending direction of the charging cable 70 changes toward a lower side from a connecting portion between the charging cable 70 and the on-board charging power source connector 30. As illustrated in Fig. 2, the connector case 31 is formed such that a space 31b on a side A side is wider than a space 31b on a side B side and hence, the conversion of the extending direction of the charging cable 70 can be performed with tolerance.

Further, the connector case fixing portion 33 has an opening portion 33a at a lower portion thereof, and the opening portion 33a forms an insertion portion for the charging cable 70. With respect to the height of the opening portion 33a from the inner back surface 27d of the battery cover 27, the height on a left side is set lower than the height on a right side. With such a configuration, the working vehicle 1 can easily perform the conversion of the extending direction of the charging cable 70 in the vicinity of the opening portion 33a. Subsequently, fixing of the battery cover 27 and the connector case 31 is described with reference to Fig. 3 and Fig. 4.

Fig. 4 is a perspective view of the connector case 31 as viewed from an inner lower side of the battery cover 27. Reinforcing plates 55, 56 are formed on the inner back surface 27d of the battery cover 27. The reinforcing plates 55, 56 are fixed by welding to the inner back surface 27d of the battery cover 27 on both left and right sides of the connector case fixing portion 33. The reinforcing plates 55, 56 have a function of reinforcing a periphery of a mounting portion of the connector case 31 of the battery cover 27. The reinforcing plate 55, 56 have raised portions 55a, 56a respectively, that extend downward from the inner back surface 27d. The raised portion 56a is disposed along the connector case fixing portion 33.

The connector case 31 is fixed by welding between the connector case fixing portion 33 and the raised portion 56a. In this manner, the connector case 31 is fixed to the battery cover 27 by way of the reinforcing plate 56.

Fig. 5 is a perspective view of a state where the battery cover 27 is fully opened as viewed from a rear side of the vehicle body 10. Fig. 5 illustrates only an upper portion of the vehicle body 10. When the battery cover 27 is fully opened at the time of maintenance or the like, the on-board charging power source connector 30 is disposed at the position that corresponds to the top portion of the battery cover 27. Fig. 5 illustrates a state where the electricity supply port 45 (see Fig. 2) of the on-board charging power source connector 30 is sealed by the connector cap 42. When the battery cover 27 is fully opened, a maintenance cover 80 appears. A service plug 81, a quick charging port 82 and a maintenance-use connector 83 are disposed on the maintenance cover 80.

The service plug 81 is provided for interrupting the supply of electricity from a battery by pulling out the service plug 81 at the time of performing the maintenance of an electric component. The quick charging port 82 is a connector that is connected to an external power source thus enabling quick charging. Further, the maintenance-use connector 83 has a function of transmitting and receiving various data at the time of performing the maintenance of a battery pack (not illustrated in the drawing). The service plug 81 and the quick charging port 82 are connected to the battery. Further, the maintenance-use connector 83 is connected to various electric circuits (not illustrated in the drawing) housed in the machine compartment 18. The maintenance cover 80 has a hinge 85 at left-side end portion thereof so that the maintenance cover 80 is openable and closable. On a depth side of the maintenance cover 80 with respect to a surface of a paper on which the maintenance cover 80 is drawn, the machine compartment 18 is disposed. By releasing the battery cover 27 and the maintenance cover 80, an operator can watch the inside of a battery pack (not illustrated in the drawing).

The charging cable 70 has a length that allows the connection between the on-board charging power source connector 30 and a charging controller (not illustrated in the drawing) when the battery cover 27 is fully opened. Although not illustrated in the drawing, the charging cable 70 is connected to the battery (not illustrated in the drawing) via a charging controller. The charging controller controls electricity from the power source to a voltage and a current suitable for charging the battery. The machine compartment 18 has a space that can house the charging cable 70 when the battery cover 27 is closed. Also when the battery cover 27 is in a full open state, the battery can be charged by removing the connector cap 42 from the on-board power source connector 30 and by connecting an electricity supply connector (not illustrated in the drawing) to the on-board charging power source connector 30.

The connector case 31 is fixed by welding inside the battery cover 27 in advance. The on-board charging power source connector 30 is mounted on the hollow connector case 31. The charging cable 70 connected to the on-board charging power source connector 30 is made to pass through the connector case 31 and is connected to the battery. In the prior art described previously, the connector case is mounted on the counterweight by screwing inside the connector case and, thereafter, the on-board charging power source connector is mounted on the connector case. On the other hand, in this embodiment, an assembly work of the on-board charging power source connector 30 is performed such that the on-board charging power source connector 30 is assembled to the connector case 31 that is integrally formed with the battery cover 27. This assembly work can be easily performed outside the connector case 31 and hence, the assembly work can be performed easily thus enabling the reduction of man-hours.

Further, the connector case 31 is fixed to one end portion in a vehicle width direction (a right side end portion in this embodiment) of an upper plate portion 27a that forms an outer side upper surface of the battery cover 27. With such a configuration, saving of a space can be realized above the upper plate portion 27a of the battery cover 27. Accordingly, an open space on the other side (the left side in this embodiment) from an on-board charging power source connector mounting position of the battery cover 27 can be effectively used. It is also possible to arrange the connector case 31 on a left side end portion of the battery cover 27.

Not to mention that the working vehicle 1 is driven using the battery as the drive power source, it is also possible to drive the working vehicle 1 by an external power source by connecting the external power source, an electricity supply cable (not illustrated in the drawing) and the charging cable 70 to the working vehicle 1.

Further, the connector case 31 is mounted on the battery cover 27 in a state where the electricity supply port 45 of the on-board charging power source connector 30 is directed toward a left side of the vehicle body 10 and toward an oblique rear side of the vehicle body 10. With such a configuration, it is possible to perform a work for connecting the on-board charging power source connector 30 and the electricity supply connector (not illustrated in the drawing) to each other in a wide space disposed on a rear side of the vehicle body 10.

The connector case 31 is fixed by welding between the connector case fixing portion 33 and the raised portion 56a of the reinforcing plate 56. The connector case 31 is integrally formed with the battery cover 27 and hence, mounting of the on-board charging power source connector 30 can be performed easily. Further, the fixing between the connector case 31 and the battery cover 27 is performed inside the battery cover 27 and hence, it is possible to realize the excellent external appearance.

Further, the connector case 31 and the on-board charging power source connector 30 are disposed inside a swing radius of the vehicle body 10. Accordingly, when the vehicle body 10 slews, there is no possibility that a failure occurs in the connector case 31 and the on-board charging power source connector 30 by an obstacle such as soil and sand, building or the like.

The connector case 31 is fixed to the openable and closable battery cover 27. The charging cable 70 has a length that allows the connection between the on-board charging power source connector 30 and the charging controller (not illustrated in the drawing) when the battery cover 27 is fully opened. Accordingly, the battery cover 27 can be freely opened or closed.

Further, the connector case 31 is constituted of: the connector mounting portion 32 that is disposed above the upper plate portion 27a of the battery cover 27; and the connector case fixing portion 33 that extends from the connector mounting portion 32 and penetrates the battery cover 27. Further, the caulking 60 is applied to the gap between the connector case 31 and the battery cover 27 as waterproof treatment and hence, it is possible to prevent the intrusion of rainwater to the inside of the battery cover 27 from this gap. The waterproof treatment is not limited to the caulking 60. For example, the use of a gasket is also considered. However, in a case where the connector case 31 is mounted on the inclined surface 27c, the use of the caulking is more preferred.

The upper surface plate portion 31a of the connector case 31 includes the connector cap holding member 43 that holds the connector cap 42. Accordingly, it is possible to prevent the occurrence of a case where the connector cap 42 becomes an obstacle during a work or the wire 61 is caught by the connector cap 42.

As has been described heretofore, the working vehicle 1 according to the present embodiment can reduce assembling man-hours of the on-board charging power source connector 30, and can realize saving of a space around the connector case 31. Further, it is possible to prevent rainwater from intruding into the connector case 31 from the gap between the battery cover 27 and the connector case 31.

### [List of reference signs]

1: working vehicle
10: vehicle body
27: battery cover
27d: inner back surface
30: on-board charging power source connector
31: on-board charging power source connector case (connector case)
32: on-board charging power source connector mounting portion (connector mounting portion)
33: on-board charging power source connector case fixing portion (connector case fixing portion)
42: connector cap
43: connector cap holding member
45: electricity supply port
55, 56: reinforcing plate
55a, 56a: raised portion
60: caulking (waterproof treatment)
70: charging cable

## Claims

1. A working vehicle comprising:
an on-board charging power source connector (30) to which a charging cable (70) for supplying electricity from an external power source to a battery disposed inside a vehicle body (10) is connected; and
a hollow on-board charging power source connector case (31) that is disposed on a rear end portion of the vehicle body (10) and an end portion of a battery cover (27) on a right side or a left side in a vehicle width direction, and allows the charging cable (70) to pass therethrough, wherein
the battery cover (27) is openable and closable in a vertical direction using a hinge,
the on-board charging power source connector case (31) includes an on-board charging power source connector mounting portion (32) that is disposed on an external side upper surface of the battery cover (27) and is configured to mount the on-board charging power source connector (30) thereon; and an on-board charging power source connector case fixing (33) portion that extends from the on-board charging power source connector mounting portion (32), and penetrates the battery cover (27),
the on-board charging power source connector (30) is mounted on the on-board charging power source connector case (31),and
the on-board charging power source connector case fixing (33) portion is fixed to a reinforcing plate (55, 56) that is fixed to an inner back surface (27d) of the battery cover (27).

2. The working vehicle according to claim 1, wherein
the on-board charging power source connector case (31) is mounted on the battery cover (27) in a state where an electricity supply port (45) of the on-board charging power source connector (30) is directed toward an oblique rear side of the vehicle body (10) with respect to the vehicle width direction.

3. The working vehicle according to claim 1 or 2, wherein
the reinforcing plate (55, 56) has a raised portion (55a, 56a) on the inner back surface (27d) of the battery cover (27),
the raised portion (55a, 56a) is disposed along the on-board charging power source connector case fixing (33) portion, and the on-board charging power source connector case (31) is fixed by welding between the on-board charging power source connector case fixing (33) portion and the raised portion (55a, 56a).

4. The working vehicle according to one of the preceding claims, wherein
the on-board charging power source connector case (31) and the on-board charging power source connector (30) are disposed inside a swing radius of the vehicle body (10).

5. The working vehicle according to one of the preceding claims, wherein
the charging cable (70) has a length that allows connection of the on-board charging power source connector (30) and a charging controller disposed between the on-board charging power source connector (30) and the battery when the battery cover (27) is fully opened.

6. The working vehicle according to one of the preceding claims, wherein
waterproof treatment is applied to a gap between the battery cover (27) and the on-board charging power source connector case (31).

7. The working vehicle according to claim 6, wherein
the waterproof treatment is caulking (60).

8. The working vehicle according to one of the preceding claims, wherein
at a top surface of the on-board charging power source connector case (31), a connector cap holding member (43) that holds a connector cap (42) for sealing an electricity supply port (45) of the on-board charging power source connector (30) is fixed.

## Patentansprüche

1. Arbeitsfahrzeug, das Folgendes umfasst:
einen Bordladestromquellenverbinder (30), mit dem ein Ladekabel (70) zum Zuführen von Elektrizität von einer externen Stromquelle zu einer Batterie, die innerhalb eines Fahrzeugaufbaus (10) angeordnet ist, verbunden ist,
ein hohles Bordladestromquellenverbinder-Gehäuse (31), das an einem hinteren Ende des Fahrzeugaufbaus (10) und einem Endabschnitt einer Batterieabdeckung (27) auf einer rechten Seite oder eine linken Seite in einer Fahrzeugbreitenrichtung angeordnet ist und ermöglicht, dass das Ladekabel (70) hindurchgeht, wobei
die Batterieabdeckung (27) unter Verwendung eines Scharniers in einer vertikalen Richtung öffenbar und verschließbar ist,
das Bordladestromquellenverbinder-Gehäuse (31) einen Bordladestromquellenverbinder-Montageabschnitt (32), der auf einer oberen Außenseitenfläche der Batterieabdeckung (27) angeordnet ist und dafür konfiguriert ist, den Bordladestromquellenverbinder (30) daran zu montieren, und einen Bordladestromquellenverbinder-Gehäusebefestigungs-Abschnitt (33), der sich von dem Bordladestromquellenverbinder-Montageabschnitt (32) aus erstreckt und die Batterieabdeckung (27) durchdringt, aufweist,
der bordeigene Ladestromquellenverbinder (30) an dem Bordladestromquellenverbinder-Gehäuse (31) montiert ist, und
der Bordladestromquellenverbinder-Gehäusebefestigungs-Abschnitt (33) an einer Verstärkungsplatte (55, 56) befestigt ist, die an einer inneren hinteren Fläche (27d) der Batterieabdeckung (27) befestigt ist.

2. Arbeitsfahrzeug nach Anspruch 1, wobei
das Bordladestromquellenverbinder-Gehäuse (31) in einem Zustand an der Batterieabdeckung (27) montiert ist, in dem ein Elektrizitätsversorgungsanschluss (45) des Bordladestromquellenverbinders (30) hin zu einer schrägen hinteren Seite des Fahrzeugaufbaus (10) in Bezug auf die Fahrzeugbreitenrichtung gerichtet ist.

3. Arbeitsfahrzeug nach Anspruch 1 oder 2, wobei
die Verstärkungsplatte (55, 56) einen erhöhten Abschnitt (55a, 56a) auf der inneren hinteren Fläche (27d) der Batterieabdeckung (27) aufweist,
der erhöhte Abschnitt (55a, 56a) entlang des Bordladestromquellenverbinder-Gehäusebefestigungs-Abschnitts (33) angeordnet ist und das Bordladestromquellenverbinder-Gehäuse (31) durch Schweißen zwischen dem Bordladestromquellenverbinder-Gehäusebefestigungs-Abschnitt (33) und dem erhöhten Abschnitt (55a, 56a) befestigt ist.

4. Arbeitsfahrzeug nach einem der vorhergehenden Ansprüche, wobei
das Bordladestromquellenverbinder-Gehäuse (31) und der Bordladestromquellenverbinder (30) innerhalb eines Schwenkradius des Fahrzeugaufbaus (10) angeordnet sind.

5. Arbeitsfahrzeug nach einem der vorhergehenden Ansprüche, wobei
das Ladekabel (70) eine Länge aufweist, die eine Verbindung des Bordladestromquellenverbinders (30) und eines Ladereglers, der zwischen dem Bordladestromquellenverbinder (30) und der Batterie angeordnet ist, ermöglicht, wenn die Batterieabdeckung (27) vollständig geöffnet ist.

6. Arbeitsfahrzeug nach einem der vorhergehenden Ansprüche, wobei
auf einen Spalt zwischen der Batterieabdeckung (27) und dem Bordladestromquellenverbinder-Gehäuse (31) eine Wasserabdichtungsbehandlung angewendet ist.

7. Arbeitsfahrzeug nach Anspruch 6, wobei
die Wasserabdichtungsbehandlung Verstemmen (60) ist.

8. Arbeitsfahrzeug nach einem der vorhergehenden Ansprüche, wobei
an einer oberen Fläche des Bordladestromquellenverbinder-Gehäuses (31) ein Verbinderkappenhalteelement (43), das eine Verbinderkappe (42) zum Abdichten eines Elektrizitätsversorgungsanschlusses (45) des Bordladestromquellenverbinders (30) hält, befestigt ist.

## Revendications

1. Véhicule de travail comprenant :
un connecteur d'alimentation de charge embarqué (30) auquel un câble de charge (70) permettant d'alimenter en électricité une batterie disposée à l'intérieur d'une carrosserie de véhicule (10) à partir d'une source d'alimentation externe est connecté ; et
un boîtier de connecteur d'alimentation de charge embarqué creux (31) qui est disposé sur une partie d'extrémité arrière de la carrosserie de véhicule (10) et une partie d'extrémité d'un couvercle de batterie (27) sur un côté droit ou un côté gauche dans une direction de largeur du véhicule, et permet le passage du câble de charge (70) à travers celui-ci, dans lequel
le couvercle de batterie (27) est ouvrable et refermable dans une direction verticale à l'aide d'une charnière,
le boîtier de connecteur d'alimentation de charge embarqué (31) comprend une partie de montage du connecteur d'alimentation de charge embarqué (32) qui est disposée sur une surface supérieure externe du couvercle de batterie (27) et est configurée pour monter le connecteur d'alimentation de charge embarqué (30) dessus ; et une partie de fixation du boîtier de connecteur d'alimentation de charge embarqué (33) qui s'étend à partir de la partie de montage du connecteur d'alimentation de charge embarqué (32), et traverse le couvercle de batterie (27),
le connecteur d'alimentation de charge embarqué (30) est monté sur le boîtier de connecteur d'alimentation de charge embarqué (31), et
la partie de fixation du boîtier de connecteur d'alimentation de charge embarqué (33) est fixée à une plaque de renforcement (55, 56) qui est fixée à une surface arrière interne (27d) du couvercle de batterie (27).

2. Véhicule de travail selon la revendication 1, dans lequel
le boîtier de connecteur d'alimentation de charge embarqué (31) est monté sur le couvercle de batterie (27) dans un état où un orifice d'alimentation en électricité (45) du connecteur d'alimentation de charge embarqué (30) est orienté vers un côté arrière oblique de la carrosserie de véhicule (10) par rapport à la direction de largeur du véhicule.

3. Véhicule de travail selon la revendication 1 ou 2, dans lequel
la plaque de renforcement (55, 56) présente une partie surélevée (55a, 56a) sur la surface arrière interne (27d) du couvercle de batterie (27),
la partie surélevée (55a, 56a) est disposée le long de la partie de fixation du boîtier de connecteur d'alimentation de charge embarqué (33), et le boîtier de connecteur d'alimentation de charge embarqué (31) est fixé par soudage entre la partie de fixation du boîtier de connecteur d'alimentation de charge embarqué (33) et la partie surélevée (55a, 56a).

4. Véhicule de travail selon l'une quelconque des revendications précédentes, dans lequel
le boîtier de connecteur d'alimentation de charge embarqué (31) et le connecteur d'alimentation de charge embarqué (30) sont disposés à l'intérieur d'un rayon de rotation de la carrosserie de véhicule (10).

5. Véhicule de travail selon l'une quelconque des revendications précédentes, dans lequel
le câble de charge (70) présente une longueur permettant la connexion du connecteur d'alimentation de charge embarqué (30) et d'un contrôleur de charge disposé entre le connecteur d'alimentation de charge embarqué (30) et la batterie lorsque le couvercle de batterie (27) est complètement ouvert.

6. Véhicule de travail selon l'une quelconque des revendications précédentes, dans lequel
un traitement d'étanchéité est appliqué à un espace entre le couvercle de batterie (27) et le boîtier de connecteur d'alimentation de charge embarqué (31).

7. Véhicule de travail selon la revendication 6, dans lequel
le traitement d'étanchéité est un calfeutrage (60).

8. Véhicule de travail selon l'une quelconque des revendications précédentes, dans lequel sur une surface supérieure du boîtier de connecteur d'alimentation de charge embarqué (31), un élément de maintien de capuchon de connecteur (43) qui maintient un capuchon de connecteur (42) pour l'obturation d'un orifice d'alimentation en électricité (45) du connecteur d'alimentation de charge embarqué (30) est fixé.
